# EUROPEAN PATENT SPECIFICATION

(11) **EP 0 606 510 B1**
(45) Date of publication and mention of the grant of the patent: **02.04.1997**
(21) Application number: 93100489.9
(22) Date of filing: 14.01.1993
(51) Int. Cl.: B29C 53/06, E05D 1/02, B31B 1/25, B65D 43/16

(54) **Composite plastic sheet material with a ruled line for bending**
Verbundkunststoffolie mit einer Linie zum Biegen
Feuille en matériau plastique composite comportant une ligne de pliage

(43) Date of publication of application: 20.07.1994
(73) Proprietor: MITSUBISHI PLASTICS INC., Chiyoda-ku, Tokyo (JP)
(72) Inventor: Hashimoto, Tadashi, c/o Mitsubishi Plastics Ind., Nagahama-shi, Shiga-ken (JP); Fujio, Masaaki, c/o Fuji Seal Industry Co., Ltd., Tsurumi-ku, Osaka-shi, Osaka (JP)
(74) Representative: Wächtershäuser, Günter, Prof. Dr.

(56) References cited:
- CH-A- 492 609
- DE-A- 3 026 436
- GB-A- 1 035 753
- GB-A- 1 362 242
- US-A- 3 747 802
- US-A- 3 911 554
- US-A- 4 642 086
- PATENT ABSTRACTS OF JAPAN vol. 8, no. 100 (M-295)(1537) 11 May 1984 & JP-A-59 12 812 (TOPPAN INSATSU) 23 January 1984

## Description

The present invention relates a composite plastic sheet material with a ruled line for bending. More particularly, the present invention relates to the construction of a ruled line for bending a composite plastic sheet material to be assembled into a box-like body as a packaging material for various kinds of articles.

GB-A-1362 242 discloses a plastics hinge which consists of a simple plactics film.

Composite plastic sheet materials have been widely used as materials for various kinds of containers. The composite plastic sheet material was formed by laminating a thinner transparent plastic film on which printing is applied and a thicker plastic film to thereby form a single sheet-like material and ruled lines for bending are formed in the sheet material to thereby impart good bending characteristic.

In order to provide good bending characteristic in the composite plastic sheet, various kinds of ruled lines for bending have been proposed. For instance, Japanese Examined Patent Publication No. 37092/1986 proposes that a ruled line consisting of cut grooves and non-grooved portions are formed in a composite plastic sheet material. Further, Japanese Unexamined patent Publication No. 128823/1989 proposes a method of forming lines of holding in a laminated sheet wherein a sheet material having a high melting point and another sheet material having a low melting point of 20°C lower than the high melting point sheet are laminated, and ruled lines are formed by pressing a heated linear-shaped metallic die from the side of the high melting point sheet material.

However, the ruled line consisting of cut grooves and non-grooved portions formed according to the former method has a disadvantage in the bending characteristic at the non-grooved portions, and it was impossible to apply composite plastic sheet materials having such ruled lines to an automatic box machine. Further, when a vinyl chloride sheet is used, the non-grooved portions are blanched when a stress is applied thereto, whereby the appearance becomes poor.

In the later method, since a plastic sheet is pressed by a heated metallic die, ridges of resin are produced at both sides of a ruled line, which cause a disadvantage in that it is impossible to bend the composite sheet material along a ruled line by 180° to the ruled line side (namely, a box-like container formed by the composite sheet material can not be made completely flat for convenience for transportation). Further, it is difficult to uniformly heat the metallic die in a case that a plastic sheet having a large surface area is processed, whereby the depth of a ruled line is changed, with the result that uniform processing can not be obtained. In addition, since the metallic die can not be quickly pressed until there causes a flow by heat in the sheet (i.e. the sheet is softened by heat), it is difficult to obtain a high speed processing.

Further, in the conventional methods, it is necessary to change the thickness of plastic sheet materials when the bending characteristic of the sheet materials is to be changed. Accordingly, the all thickness of plastic sheet materials has to be changed in every operations so as to correspond the size of containers to be formed.

It is an object of the present invention to provide a composite plastic sheet material with a ruled line for bending which provides good bending characteristic, a sufficient strength and easiness of forming a ruled line.

In accordance with the present invention, there is provided a composite plastic sheet material with a ruled line for bending which comprises a plurality of laminated plastic films in which a ruled line is formed wherein the depth of the ruled line is larger than the thickness of a plastic film disposed at the side from which a ruled line forming blade is pressed at the time of forming a ruled line, and the ruled line has at least two kinds of depth in the longitudinal direction of the ruled line, and wherein the depth of the deep portions of the ruled line is in a range from 60% to 100% with respect to the entire thickness of the laminated plastic films and the depth of the shallow portions is in a range from 20% to 95%.

The depth of a ruled line of 100 % with respect to the entire thickness of the laminated plastic films means that the ruled line completely penetrates in the direction of the thickness of the sheet material.

In drawings:
Figure 1 is a perspective view partly omitted of a first embodiment of the composite sheet material according to the present invention;
Figure 2 is a cross-sectional view of the composite sheet material shown in Figure 1;
Figure 3 is a cross-sectional view taken along a line III-III in Figure 2;
Figure 4 is a cross-sectional view showing a second embodiment of the present invention;
Figure 5 is a cross-sectional view taken along a line V-V in Figure 4;
Figure 6 is a cross-sectional view showing another embodiment of the composite plastic sheet material according to the present invention;
Figure 7 is a front view partly omitted of a ruled line forming blade used for forming a ruled line in the composite plastic sheet material of the present invention;
Figure 8 is a diagram showing a state of forming a ruled line: and
Figure 9 is a diagram showing a state of bending the composite plastic sheet material of the present invention.

Preferred embodiments of the composite plastic sheet material of the invention will be described with reference to the drawings wherein the same reference numerals designate the same or corresponding parts.

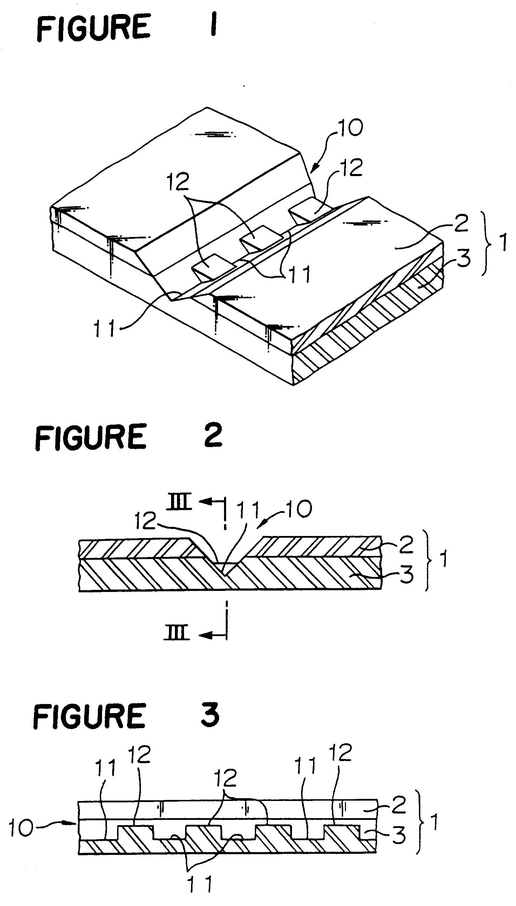

Referring to Figures 1 to 3, a composite plastic sheet material 1 comprises a thinner plastic film 2 and a thicker plastic film 3 which are laminated. The thinner plastic film 2 is disposed at the side from which a ruled line forming blade is pressed.

For the plastic film 2, any film having good printing characteristic and destaticization may be used, for instance, polyvinyl chloride, polypropylene, polyester, polystyrene or the like is used solely or as a composite film. For the plastic film 3, material having a sufficient elongation free from breaking even when it is stretched at the time of forming a ruled line, the material being such as A-PET sheet (e.g. a transparent sheet of polyethylene terephthalate having a degree of crystallization of 5% or lower), polypropylene, polyethylene, polyvinyl chloride or the like. The films 2 and 3 are bonded together by an appropriate bonding means such as dry laminating to form the composite plastic sheet material 1.

The thickness of the films 2 and 3 are not particularly limited. However, when the thickness of the film 2 from which a ruled line forming blade is pressed exceeds 50% with respect to the entire thickness of the laminated films, a possibility that a bonding layer having poor elongation remains at the portion just below the ruled line becomes high, whereby the strength is decreased and the bending characteristic is also decreased. A preferred range of the thickness of the plastic film 2 is 0.005mm - 0.1 mm, and 0.1 mm - 2.0 mm for the plastic film 3.

Generally, printing is conducted on the bonding surface of the plastic film 2. Accordingly, when feasibility of printing is considered, it is preferable to use a thin film for the plastic film 2.

As shown in Figures 1 to 3, a ruled line for bending is formed in the composite plastic sheet material 1 by pressing a ruled line forming blade from the side of the plastic film 2. The depth of the ruled line 10 is larger than the thickness of the plastic film 2. Further, deep groove portions 11 and shallow groove portions 12 are alternately formed with appropriate intervals in the longitudinal direction of the ruled line.

The depth of the deep groove portions 11 and the shallow groove portions 12 of the ruled line 10 may be determined appropriately depending on the structure, an angle of bending, a requisite bending characteristic and the strength of a composite plastic sheet material 1 used. However, when the depth of the ruled line 10 is smaller than the thickness of the plastic film 2 from which the ruled line forming blade is pressed, the bending characteristic of the sheet material is decreased because the bonding layer having a low elongation remains at remaining thickness portions. When the depth of the deep groove portions 11 is less than 60% of the entire thickness of the sheet material 1, or the depth of the shallow groove portions 12 is less than 20% of the entire thickness of the sheet material 1, the bending characteristic is poor. On the other hand, when the depth of the shallow groove portions 12 exceeds 95% of the entire thickness of the sheet material 1, the strength is decreased. Accordingly, it is preferable that the thickness of the deep groove portions 11 is in a range of from 60% - 100% with respect to the entire thickness of the sheet material 1, and the depth of the shallow groove portions 12 is in a range of from 20% to 95%.

Figures 4 and 5 show a ruled line 20 wherein the depth of deep groove portions 21 is 100% with respect to the entire thickness of the sheet material 1, namely, the deep groove portions 21 completely penetrate the sheet material 1. Accordingly, openings 23 are formed between shallow groove portions 22 in the ruled line 20.

The lengths or intervals of the deep groove portions 11 (21) and the shallow groove portions 12 (22) in the ruled line 10 (20) are determined depending on the bending characteristic required and the strength. For instance, the strength of the plastic sheet material can be increased by keeping the deep groove portions 11 and making the shallow groove portions 12 to be shallow. However, when the wall thickness of the remaining thickness portions is increased, the bending characteristic of the plastic sheet material is deteriorated. Further, there may produce blanching in the sheet material. Accordingly, in order to increase the strength of the portion of the ruled line, it is preferable to increase the proportion of the shallow groove portions 12 which have a larger depth rather than increasing the remaining thickness portions. Further, in order to increase the bending characteristic, it is preferable that the depth of the deep groove portions 11 be large, particularly, the depth is 100%. It is possible that the deep groove portions 11 and the shallow groove portions 12 are connected with a step, a slanting surface or a curved surface.

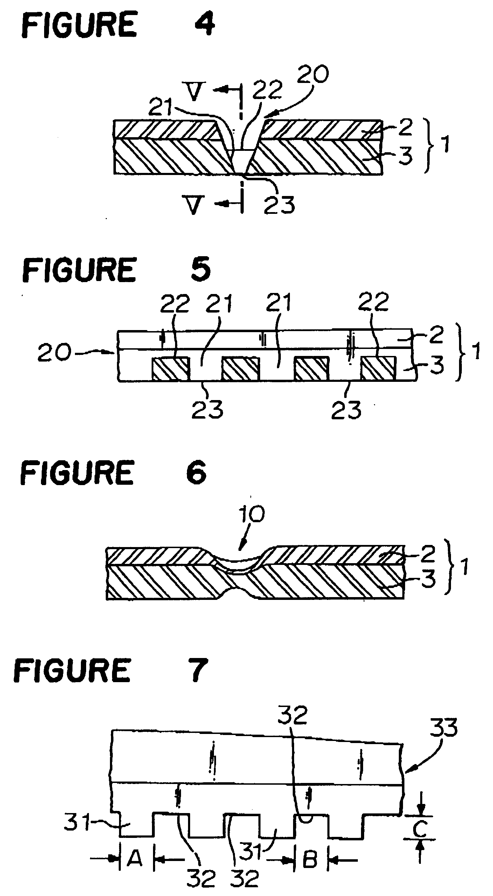

As shown in Figure 6, there may be a case that depending on the shape of the edge of the ruled line forming blade and material for the plastic sheet material 1, the plastic film 2 is not cut away at the ruled line portion but is formed thin by stretching whereby the remaining thickness portions are located at the central portion in the direction of the thickness of the plastic sheet material 1 due to the restoring force of the film 2. In this case, it is possible to bend the sheet material toward the side of the plastic film 2 on the contrary of the normally bending direction. Further, when printing is conducted in the ruled line area, the printing area is not be broken, whereby the appearance is improved.

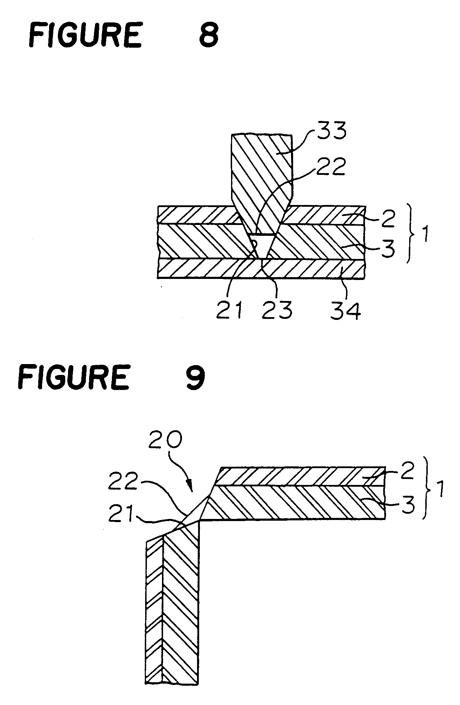

The ruled line 10 (20) which has been mentioned can be easily produced by using a ruled line forming blade 33 having convex portions 31 for forming the deep groove portions 11 and concaves 32 for forming the shallow groove portions 12 as shown in Figure 7. In the ruled line forming blade 33, the length A of the convex portions 31, the length B of the concave portions 32 and the different in height C between the concave and convex portions are determined depending on the shape of the ruled line to be produced. By adjusting the distance of the depression of the ruled line forming blade 33, the ruled line 10 as shown in Figures 1 to 3 can be produced. Further, by depressing the ruled line forming blade 33 until the edge of the convex portions 31 comes to contact with a lower plate 34, the ruled line 20 as shown in Figures 4 and 5 can be produced.

In the following, an example of preparing the composite plastic sheet material with a ruled line for bending of the present invention will be described. However, the present invention should not be limited to the specified example.

As a composite plastic sheet material 1, a stretched polyester film having a thickness of 20 µm and an A-PET sheet having a thickness of 0.25 mm were used as a plastic film 2 and a plastic sheet 3 respectively. Printing was conducted on the bonding surface of the plastic film 2. The plastic film 2 and the plastic sheet 3 were dry-laminated to obtain a sheet material wherein the entire thickness was 0.27 mm and the thickness of bonding layer was 5 µm. A ruled line forming blade 33 having an angle of blade edge of 45°, a length A of convex portions 31 of 0.6 mm, a length B of concave portions 32 of 0.4 mm and a difference C in height of the convex and concave portions of 0.15 mm was used. The ruled line forming blade 33 was depressed to the plastic sheet material 11 from the side of the stretched polyester film until the convex portions 31 of the ruled line forming blade 33 comes to contact with the lower plate 34 as shown in Figure 8. Thus, the ruled line 20 as shown in Figures 4 and 5 was formed. As a result, deep groove portions 21 of the ruled line 20 became a completely open state, and the wall thickness of the portion just below the shallow groove portions 22 was 0.15 mm. The above-mentioned operations were conducted in a cold state. However, it is possible to conduct the above-mentioned operations by heating the ruled line forming blade 33 and/or the lower plate 34.

Thus obtained plastic sheet material 1 was bent along the ruled line 20 so as to open the cut portion as shown in Figure 9. As a result, excellent bending characteristic could be obtained.

Ruled lines 20 were formed at predetermined portions in sheet materials 1 in order to form transparent casings of a size of 90 × 30 × 65 mm. The sheet materials 1 were put in an automatic box machine (an upright cartoning machine, model CMV-B type, manufactured by Osaka Jidoki kabushiki Kaisha) to examine easiness of forming boxes. As a result, boxes could be manufactured efficiently at a rate of 70/min.

Further, solid soaps were put in the casings manufactured, and comparison was made to examine the strength of the casings with boxes having the same dimension formed by using another sheet material. As a result, there was found no breaking in practical use at the ruled line portions. Further, the ruled line portions were repeatedly bent 30 times by 180°. As a result, there was no breaking at the ruled line portions.

As described above, in accordance with the composite plastic sheet material with a ruled line for bending according to the present invention, the ruled line portion having excellent bending characteristic can be obtained while a sufficient strength is provided. Further, it is easy to form the ruled line, and it can be formed at a high speed. Accordingly, the forming of the ruled line and bending operations can be continuously conducted at a high speed in an automatic box machine whereby casings of the composite plastic sheet material can be efficiency manufactured.

Further, by adjusting the wall thickness at the shallow groove portions, blanching can be prevented and the appearance of the ruled line portions is excellent. In addition, the changing of the strength at the ruled line portions and the bending characteristic can be achieved by changing the rule line forming blade regardless of the construction of the plastic sheet material.

## Claims

1. A composite plastic sheet material (1) with a ruled line (10, 20) for bending which consists of a thinner plastic film (2) and a thicker plastic film (3) which are laminated in which the ruled line is formed from the thinner plastic film side wherein the depth of the ruled line is larger than the thickness of the thinner plastic film (2) disposed at the side from which a ruled line forming blade (33) is pressed at the time of forming the ruled line (10, 20), and the ruled line has at least two kinds of depth in the longitudinal direction of the ruled line (10, 20), and wherein the depth of the deep portions (11, 21) of the ruled line is in a range from 60% to 100% with respect to the entire thickness of the laminated plastic films and the depth of the shallow portions (12, 22) is in a range from 20% to 95%.

2. The composite plastic sheet material (1) according to Claim 1, wherein the deep portions (11) and the shallow portions (12) are alternately formed in the ruled line (10, 20).

3. The composite plastic sheet material (1) according to Claim 1, wherein openings (23) are formed at the bottom of the deep portions (21).

## Patentansprüche

1. Verbundkunststoffolie (1) mit einer gebildeten Linie (10,20) zum Biegen, bestehend aus einem dünneren Kunststoffilm (2) und einem dickeren Kunststoffilm (3), die laminiert sind, und bei der die Linie von der Seite des dünneren Kunststoffilmes ausgebildet ist, und wobei die Tiefe der gebildeten Linie größer als die Dicke des dünneren Kunststoffilmes (2) ist, der an der Seite angeordnet ist, von der aus ein Messer (3) zum Bilden der Linie zur Zeit der Bildung der Linie (10,20) eingepreßt wird, und wobei die gebildete Linie mindestens zwei Tiefen in der Längsrichtung der Linie (10,20) aufweist, und wobei die Tiefe der tiefen Abschnitte (11,21) der gebildeten Linie in einem Bereich von 60% bis 100% mit Bezug auf die Gesamtdicke der laminierten Kunststoffilme liegt, und die Tiefe der flachen Abschnitte (12,22) in einem Bereich von 20% bis 95% liegt.

2. Verbundkunststoffolie (1) nach Anspruch 1, worin die tiefen Abschnitte (11) und die flachen Abschnitte (12) in der Linie (10,20) abwechselnd ausgebildet sind.

3. Verbundkunststoffolie (1) nach Anspruch 1, worin Öffnungen (23) am Boden der tiefen Abschnitte (21) ausgebildet sind.

## Revendications

1. Matière plastique composite en feuille (1) comportant une ligne de pliage tracée (10, 20) et constituée d'un film en matière plastique mince (2) et d'un film plastique épais (2) qui sont superposés et dans lesquels la ligne de pliage est formée du côté du film en matière plastique mince, la profondeur de la ligne de pliage étant supérieure à l'épaisseur du film en matière plastique mince (2) disposé du côté à partir duquel une lame de formation de ligne de pliage (33) est pressée au moment de la formation de la ligne de pliage (10, 20), la ligne de pliage présentant au moins deux types de profondeur dans sa direction longitudinale, la profondeur des parties profondes (11, 21) de la ligne de pliage se situent dans une plage de 60 à 100 % par rapport à l'épaisseur totale des films en matière plastique superposés tandis que la profondeur des parties peu profondes (12, 22) se situe dans une plage de 20 à 95°.

2. Matière plastique composite en feuille (1) selon la revendication 1, dans laquelle les parties profondes (11) et les parties peu profondes (12) sont formées en alternance dans la ligne de pliage (10, 20).

3. Matière plastique composite en feuille (1) selon la revendication 1, dans laquelle des ouvertures (23) sont formées au niveau du fond des parties profondes (21).
